(19) Europäisches Patentamt / European Patent Office / Office européen des brevets

(11) **EP 3 051 195 A1**

(12) **EUROPEAN PATENT APPLICATION**
published in accordance with Art. 153(4) EPC

(43) Date of publication:
**03.08.2016 Bulletin 2016/31**

(21) Application number: **14848864.6**

(22) Date of filing: **24.09.2014**

(51) Int Cl.:
*F16L 11/04* (2006.01)     *F16L 11/08* (2006.01)
*F16L 11/10* (2006.01)

(86) International application number:
**PCT/KR2014/008906**

(87) International publication number:
**WO 2015/046882 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.09.2013 KR 20130115259**

(71) Applicant: **Kolon Industries, Inc.
Gyeonggi-do 13837 (KR)**

(72) Inventors:
• **JEON, Ok-Hwa
Yongin-si
Gyeonggi-do 446-797 (KR)**
• **LEE, Min-Ho
Yongin-si
Gyeonggi-do 446-797 (KR)**

(74) Representative: **Merkle, Gebhard
Ter Meer Steinmeister & Partner
Patentanwälte mbB
Nymphenburger Straße 4
80335 München (DE)**

(54) **BRAKE HOSE**

(57)     The present invention relates to a brake hose including a reinforcing member that has more excellent shape stability, durability, high modulus, and a low deterioration in modulus at a high temperature.

The brake hose includes: rubber layers; and a reinforcing member formed between the rubber layers or on the rubber layers, in which the reinforcing member may include a polyethylene terephthalate dip cord that is applied with an initial load of 0.01 g/d to be fixed after being subjected to heat treatment for 15 minutes under a tension of 0.01 g/d at 180 °C and has a creep rate equal to or less than 7.0% when being left for 24 hours while being applied with a load of 0.791 g/d at 100 °C.

[FIG 3]

Comp. Example 1:room temperature
Comp. Example 1:150 °C at 2 min
Comp. Example 1:150 °C at 30 min
Comp. Example 1:150 °C at 60 min

Example 1:room temperature
Example 1:150 °C at 2 min
Example 1:150 °C at 30 min
Example 1:150 °C at 60 min

EP 3 051 195 A1

**Description**

**[Technical Field]**

The present invention relates to a brake hose including a reinforcing member that has more excellent shape stability, durability, high modulus, and a low deterioration in modulus at a high temperature.

**[Background Art]**

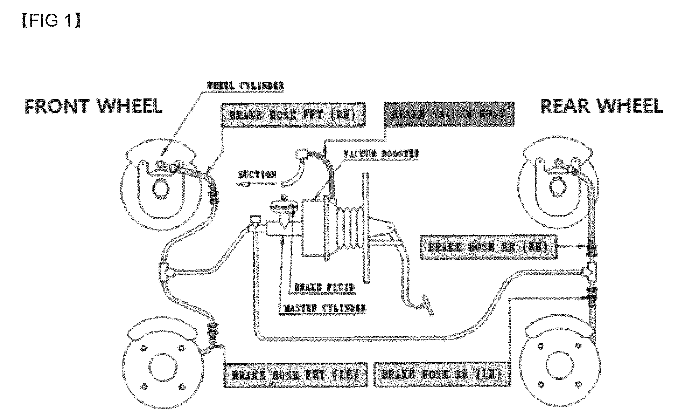

A brake apparatus for a vehicle, or the like has used a brake hose that transfers a high oil pressure generated from a brake master cylinder to each wheel and calipers to generate a braking force. For reference, FIG. 1 schematically illustrates an example in which the brake apparatus uses the brake hose.

The brake hose should transfer a high oil pressure generated from a brake fluid to each wheel, and therefore should have high flexural fatigue resistance, pressure resistance (oil pressure resistance), brake resistance, or the like. To provide the brake hose indicating the characteristics, the brake hose may generally include at least one rubber layer (generally, two rubber layers) forming a shape thereof and a reinforcing member formed between the rubber layers or on the rubber layers to reinforce the brake hose.

To give the required characteristics to the brake hose, the reinforcing member needs to have the excellent shape stability at a room temperature and a high temperature, the durability, the high modulus, and excellent adhesive property by applying an adhesive to a surface of the brake hose to be bonded to the rubber layers well, or the like. Further, these physical properties need not deteriorate even at a high temperature.

As a material forming the reinforcing member of the brake hose, a polyvinyl alcohol (PVA) based polymer has been used. It has been known that the PVA based polymer may have the excellent adhesive property due to a plurality of hydroxy groups, or the like in a molecular structure thereof and relatively higher modulus and strength.

However, the PVA based polymer does not have sufficient heat resistance and therefore has a problem in that the deterioration in the modulus is large at the high temperature corresponding to the use environment of the brake hose. In addition, the PVA based polymer is relatively expensive and is unstable in supply and demand all around the world. Therefore, the development for an alternate material that may be appropriately used as the reinforcing member of the brake hose instead of the PVA based polymer has been required.

Notwithstanding, the required physical properties for the reinforcing member for the brake hose, for example, the alternate material meeting the excellent shape stability, the durability, the adhesive property, or the like while holding the high modulus at the room temperature and the high temperature without particular deterioration has not yet been proposed.

**[DISCLOSURE]**

**[Technical Problem]**

The present invention has been made in an effort to provide a brake hose including a reinforcing member that has more excellent shape stability, durability, high modulus, and a low deterioration in modulus at a high temperature.

[Technical Solution]

An exemplary embodiment of the present invention provides a brake hose including: rubber layers; and a reinforcing member formed between the rubber layers or on the rubber layers,
in which the reinforcing member includes a polyethylene terephthalate dip cord that is applied with an initial load of 0.01 g/d to be fixed after being subjected to heat treatment for 15 minutes under a tension of 0.01 g/d at 180 °C and has a creep rate equal to or less than 7.0% when being left for 24 hours while being applied with a load of 0.791 g/d at 100 °C and the creep rate may be defined by the following Calculation Equation 1.

[Calculation Equation 1]

$$\text{Creep rate} = (L - L_0) / L_0 \times 100$$

In the above calculation Equation, L may represent a length of the dip cord after the reinforcing member is left for 24 hours and $L_0$ may represent a length of the dip cord when the reinforcing member is applied with the initial load to be fixed.

Hereinafter, the brake hose according to a detailed implementation example of the present invention will be described in more detail. However, this is proposed by only one example of the present invention. Therefore, it is apparent to those skilled in the art that the scope of the present invention is not limited thereto and various changes for the implementation example may be made within the scope of the invention.

In addition, unless specially mentioned throughout the present specification, 'comprising' or 'containing' represents including any constituent elements (or components) without being particular limited and may not be construed as ruling out other constituent element (or components).

One implementation example of the present invention provides a brake hose including a polyethylene terephthalate (hereinafter, referred to as 'PET') dip cord meeting a predetermined low creep rate as a new reinforcing member even after the polyethylene terephthalate dip cord is subjected to heat treatment at specific physical property, that is, at a high temperature of about 180 °C.

In more detail, the brake hose according to one implementation example includes: the rubber layers; and the reinforcing member formed between the rubber layers or on the rubber layers, in which the reinforcing member may include the polyethylene terephthalate dip cord that is applied with an initial load of about 0.01 g/d to be fixed after being subjected to heat treatment for 15 minutes under a tension of 0.01 g/d at about 180 °C and has a creep rate equal to or less than about 7.0% or the creep rate of about 0 to 7.0 %, about 4.0 to 7.0, or about 5.0 to 6.8% when being left for 24 hours while being applied with a load of 0.791 g/d at 100 °C and the creep rate may be defined by the following Calculation Equation 1.

$$\text{Creep rate} = (L - L_0) / L_0 \times 100$$

[Calculation Equation 1]

In the above calculation Equation, $L$ may represent a length of the dip cord after the reinforcing member is left for 24 hours and $L_0$ may represent a length of the dip cord when the reinforcing member is applied with the initial load to be fixed.

In the brake hose according to one implementation example, the PET dip cord included as the reinforcing member may be manufactured by obtaining a PET undrawn yarn and drawn yarn under a specific spinning and drawing condition and then dipping the PET drawn yarn in an adhesive.

As the PET dip cord is obtained by a specific manufacturing process, the PET dip cord may represent a low creep rate even under the high temperature and the low creep rate may reflect very excellent shape stability and high modulus under the high temperature corresponding to the use environment of the brake hose. Further, even though the PET dip cord is exposed under the high temperature, it was confirmed that deterioration in the modulus is small. Due to the excellent physical properties of the low deterioration in modulus under the excellent shape stability, the high modulus, and the high temperature, it was confirmed that the PET dip cord may solve the problem of the existing PVA based polymer used as the reinforcing member for the brake hose, for example, the problem of the large deterioration in modulus at the high temperature and may be preferably used as the reinforcing member for the brake hose.

Meanwhile, since the reinforcing member for the brake hose secures adhesive property to rubber, the reinforcing member may be dipped in and coated on an adhesive such as RFL and thus may be generally applied in the foregoing dip cord form. By the way, for the dipping in and coating on the adhesive, there is a need to progress the heat treatment under the temperature and tension more than a predetermined level.

Since the existing PVA based polymer basically does not have high heat resistance, when the PVA based polymer is applied with tension and heat during the heat treatment, the durability such as stiffness and the modulus may greatly deteriorate. Therefore, in the case of the reinforcing member for the brake hose in the dip cord form to which the PVA based polymer and an original yarn are applied, the PVA based polymer cannot but show the durability and modulus lower than those of the original yarn, or the like, which may lead to performance deterioration in the brake hose that is a final product.

However, the foregoing PET dip cord has the excellent heat resistance, and as a result the deterioration in the durability such as the stiffness or the modulus after the heat treatment process may little occur and the modulus due to the setting of the tension condition, or the like may be rather increased. Accordingly, according to one implementation example, it is possible to greatly improve performance of a brake hose that is the final product by applying the PET dip cord and the brake hose including the same.

In addition, the PET dip cord is relatively inexpensive and is made of the PET polymer which is easy in supply and demand, and therefore may be preferably applied as the material of the reinforcing member for the brake hose replacing the existing PVA based polymer.

Hereinafter, the PET dip cord that is a new reinforcing member, the manufacturing method thereof, and the brake hose including the same will be described in more detail.

The PET dip cord included in the brake hose according to one implementation example as the reinforcing member includes PET over 90% mol to show the preferred physical properties such as the foregoing creep rate, in which when the PET dip cord includes the PET having a content below 90 mol%, it is difficult to show the preferred physical properties that the present invention intends to obtain. Hereinafter, therefore, the term PET means the case in which the PET is equal to or more than 90 mol% without special description.

The PET dip cord may be manufactured by manufacturing the undrawn yarn by melt-spinning the PET, manufacturing the PET drawn yarn by drawing the undrawn yarn, and then dipping the PET drawn yarn in the adhesive. The characteristics of the undrawn yarn manufactured by melt-spinning the PET and the drawn yarn manufactured by drawing the same are directly and indirectly reflected to the physical properties of the dip cord. Further, the detailed conditions or the progress method of each step including the step of manufacturing the undrawn yarn by the melt-spinning, the step of manufacturing the drawn yarn by the drawing, the process of dipping the adhesive, or the like are directly / indirectly reflected to the physical properties of the PET dip cord, thereby manufacturing the PET dip cord having the foregoing physical properties.

In particular, as the PET undrawn yarn having crystallinity equal to or more than about 25% and an amorphous orientation factor (AOF) equal to or less than about 0.15 is obtained by controlling the condition of melt-spinning the PET and the PET drawn yarn and the dip cord are manufactured using the PET undrawn yarn, it was confirmed that the PET dip cord having the foregoing creep rate, the excellent shape stability, the high modulus, and the low deterioration in modulus at the high temperature may be manufactured. This is predicted due to the technical principle as follows.

A portion of the PET basically has the crystallized form and therefore is configured of the crystalline region and the amorphous region. By the way, the PET undrawn yarn obtained under the controlled melt-spinning condition to be described below has the crystallinity higher than that of the PET undrawn yarn previously known due to the orientation crystallization phenomenon and therefore may have the high crystallinity of about 25% or more or about 25 to 40%. Due to the high crystallinity, the PET dip cord, etc., manufactured from the PET undrawn yarn may show the high shrinkage stress and modulus.

Simultaneously, the PET undrawn yarn may have the amorphous orientation factor of about 0.15 or less or about 0.08 to 0.15 even lower than that of the PET undrawn yarn previously known. In this case, the amorphous orientation factor represents the orientation of chains included in the amorphous region within the undrawn yarn. Here, as the tangle of the chains included in the amorphous region is increased, the amorphous orientation factor is getting lower and lower. That is, in general, if the amorphous orientation factor is reduced, the disorder is increased and thus the chains of the amorphous region do not have a tensioned structure but a relaxed structure, such that the drawn yarn and the dip cord manufactured from the undrawn yarn have the low shrinkage rate and the low shrinkage stress. However, the PET undrawn yarn obtained under the controlled melt-spinning condition to be described below may include more cross-linked bonds per unit volume while forming the fine network structure due to the sliding during the spinning of the molecular chains forming the PET undrawn yarn. For this reason, the PET undrawn yarn may show the developed crystalline structure and the excellent orientation characteristics since the chains of the amorphous region have the network structure while the amorphous orientation factor is greatly reduced.

Therefore, it is possible to manufacture the PET dip cord, or the like that simultaneously shows the low shrinkage rate and the high shrinkage stress using the PET undrawn yarn having the high crystallinity and the low amorphous orientation factor. Further, the PET dip cord having the above-mentioned excellent physical properties such as the low creep rate, the excellent shape stability, the high modulus, and the low deterioration in modulus at the high temperature may be provided.

The manufacturing method of the PET dip cord will be described below for each step.

In the manufacturing method, first, the PET undrawn yarn having the above-mentioned high crystallinity and the low amorphous orientation factor is manufactured by melt-spinning the PET.

In this case, to obtain the PET undrawn yarn meeting the crystallinity and the amorphous orientation factor, the melt-spinning process may be progressed under the higher spinning tension. For example, the melting spinning process may be progressed under the spinning tension of about 0.85 g/d or more or 0.85 to 1.2 g/d. Further, for example, a melt-spinning speed of the PET may be controlled to about 3800 to 5000 m / min, appropriately, about 4000 to 4500 m/min.

As the melt-spinning process of the PET is progressed under the high spinning tension and the spinning speed, the crystallinity is increased while the orientation crystallization phenomenon of the PET appears and the molecular chains forming the PET are slid during the spinning to form the fine network structure, such that it was confirmed that the PET undrawn yarn meeting the crystallinity and the amorphous orientation factor described above may be obtained.

Further, in the manufacturing process of the PET undrawn yarn, a chip including polyethylene terephthalate having intrinsic viscosity of about 0.8 to 1.3 and about 90 mol% or more may be melt-spun as the PET.

As described above, the higher spinning tension and the selectively high spinning speed may be given in the manufacturing process of the PET undrawn yarn. To preferably progress the spinning process under the condition, the intrinsic viscosity of the chip is preferably equal to or more than about 0.8. However, to prevent a molecule chain from being cut due to the increase in melting temperature of the chip and prevent a pressure from increasing due to the discharge quantity from a spinning pack, the intrinsic viscosity is preferably about 1.3 or less.

Further, the chip is appropriately spun through a devised nozzle so that fineness of monofilament is in a range of about 2.0 to 5.0 deniers or about 2.0 to 3.0 deniers. That is, to lower the occurrence possibility of a broken yarn during the spinning and the occurrence possibility of a broken yarn due to the mutual interference at the time of cooling and suppress a damage to the monofilament due to a friction, and the like during the post-process, the fineness of the monofilament should be equal to or more about 2.0 deniers and to give the sufficiently high spinning tension by increasing a spinning draft, the fineness of the monofilament is appropriately equal to or less than about 5.0 deniers.

Further, after the melt-spinning of the PET, a cooling process is given to be able to manufacture the PET undrawn yarn. The cooling process may be progressed by a method for applying cooling air of about 15 to 60 °C and a cooling wind volume may be controlled to be about 0.4 to 1.5 m / s in each cooling air temperature condition. By doing so, the dip cord having the physical properties such as the above-mentioned creep rate may be more easily manufactured.

After the PET undrawn yarn meeting the above-mentioned crystallinity and the amorphous orientation factor was manufacutred by the spinning process, the drawn yarn is manufactured by drawing the undrawn yarn. The drawing process may be progressed under the drawing ratio condition of about 1.70 or less or about 1.2 to 1.6. The PET undrawn yarn has the developed crystalline region and the chains of the amorphous region have the low orientation and form the fine network. Therefore, if the drawing process is progressed under the high drawing ratio condition over about 1.70, a broken yarn, hairness, or the like may occur in the drawn yarn, and therefore the finally obtained PET dip cord, or the like is hard to show the preferred physical properties. In particular, although drawn, it is difficult to reveal the excellent physical properties depending on the excessive orientation of the amorphous chains. Further, if the drawing process is progressed under the relatively lower drawing ratio, the strength of the PET dip cord, etc., manufactured therefrom may be partially reduced. However, the PET dip cord indicating the strength suitable to be applied as the reinforcing member for the brake hose may be manufactured under the drawing ratio of about 1.2 or more, and therefore the drawing process may be progressed under the drawing ratio condition of about 1.70 or less or about 1.2 to 1.6 as described above.

Meanwhile, after the PET drawn yarn is manufactured by the foregoing process, the PET drawn yarn is dipped in the adhesive to manufacture the PET dip cord and a plied yarn process may also be progressed before the PET drawn yarn is selectively dipped in the adhesive. The plied yarn process and the dipping process may be based on the manufacturing process condition and method of the general tire cord and therefore the additional description thereof will be omitted.

By the foregoing manufacturing method, even after the PET dip cord is subjected to heat treatment at about 180 °C and is then left at the high temperature of about 100 °C, the PET dip cord showing the low creep rate of about 7.0% or less as described above, for example, about 0 to 7.0%, about 0 to 7.0%, about 4.0 to 7.0%, or about 5.0 to 6.8% may be manufactured.

The PET dip cord may be little deformed by the change in the pressure or load even at the high temperature and may show the excellent shape stability, the higher modulus, and the low deterioration in modulus at the high temperature, due to the foregoing low creep rate. Therefore, the PET dip cord replaces the PVA based polymer as the reinforcing member for the brake hose and therefore may be very preferably applied.

Further, when the PET dip cord is subjected to the heat treatment at about 180 °C with a tension of about 0.01 g / d for 15 minutes, applied with an initial load of about 0.01 g / d to be fixed, and applied with a load of about 0.791 g / d at about 20 °C and then left for 24 hours, the creep rate may be about 4.0% or less, about 0 to 4.0%, about 2.5 to 4.0%, or about 3.0 to 3.9%.

Therefore, the PET dip cord constantly shows the excellent shape stability and the high modulus under the room temperature and the high temperature, and as a result the drawbacks of the existing PVA based polymer may be overcome and may be very preferably applied as the reinforcing member for the brake hose. However, the PET dip cord is applied as a tire cord, or the like from before and is applied with the adhesive to show the excellent adhesive characteristics of being effectively bonded to the rubber layer. Therefore, the PET dip cord may meet most of the physical properties required for the reinforcing member for the brake hose.

Further, when the tensile strength and the elongation of the PET dip cord are measured after the PET dip cord is subjected to the heat treatment for about 2 minutes at the temperature of about 150 °C and under the initial load of about 0.05 g/d, a change rate in elongation under a specific load of about 0.5 to 4.5 kgf based on an initial elongation of 100% measured before the heat treatment is equal to or less than about 150 % or about 110 to 150%.

Further, when the tensile strength and the elongation of the PET dip cord are measured after the PET dip cord is subjected to the heat treatment for about 30 minutes at the temperature of about 150 °C and under the initial load of about 0.05 g/d, a change rate in elongation under a specific load of about 0.5 to 4.5 kgf based on an initial elongation of 100% measured before the heat treatment is equal to or less than about 160% or about 110 to 155%.

Further, when the tensile strength and the elongation of the PET dip cord are measured after the PET dip cord is subjected to the heat treatment for about 30 minutes at the temperature of about 150 °C and under the initial load of about 0.05 g/d, a change rate in elongation under a specific load of about 0.5 to 4.5 kgf based on an initial elongation of 100% measured before the heat treatment is equal to or less than about 120% or about 80 to 115%.

As a result, even after the PET dip cord is subjected to the heat treatment at the high temperature for a predetermined time, the PET dip cord may show the characteristics of holding the change rate in physical properties such as elongation under a load of about 0.5 to 4.5 kgf at about 160% or less or about 80 to 155% or less.

On the other hand, in the case of the reinforcing member in the dip cord form including the PVA based polymer, the change rate in physical properties such as the elongation under the same condition becomes up to about 280%, and therefore the change in physical properties may be greatly shown. As described above, as the change rate in elongation compared to the initial elongation is not greatly shown even at the high temperature condition, the PET dip cord and the brake hose including the same as the reinforcing member may show the excellent durability and performance even when they are used for a long time.

In addition, the PET dip cord as described above may show the higher density than the reinforcing member including the existing PVA based polymer and show a lower volume at the same weight, as supported by exemplary embodiments to be described below. As a result, the PET dip cord may include the PET original yarn at the higher fineness based on the same volume, and as a result the durability such as the stiffness of the brake hose including the PET dip cord as the reinforcing member may be more improved and the initial expansion rate may be effectively suppressed.

Meanwhile, the form of the PET dip cord as described above is not particularly limited and according to the typical form of the reinforcing member for the brake hose, the PET dip cord may have the form in which the total fineness per the cord is 500 to 300 deniers (d) and the number of plies is 1 to 3, and the twist number is 0 to 100 TPM.

Further, the PET dip cord may show the strength of about 5 to 8 g / d or about 5.5 to 8 g / d, the elongation of about 2.0 to 7.0% (elongation at a load of 4.5 kg), and the cut elongation of about 10 to 25%. As the dip cord shows the physical properties such as the strength and elongation of the range, the dip cord may be preferably applied as the reinforcing member for the brake hose.

Meanwhile, the brake hose including the foregoing PET dip cord as the reinforcing member may include at least one rubber layer forming the hose shape and the reinforcing member formed between the rubber layers or on the rubber layers to reinforce the brake hose, according to the form of the general brake hose. In more detail, the brake hose includes rubber layers of two layers, that is, a first rubber layer inside thereof and a second rubber layer outside thereof and the reinforcing member may be formed between the first and second rubber layers. In particular, the reinforcing member including the PET dip cord may be bonded to an inner surface of the second rubber layer.

In the brake apparatus such as a vehicle, the brake hose may be used to transfer the high oil pressure generated from the brake master cylinder to each wheel and caliper to generate a braking force and may be applied to each wheel as illustrated in FIG. 1.

In particular, the brake hose includes as the reinforcing member the predetermined PET dip cord meeting the excellent shape stability at the room temperature and the high temperature, the high modulus, and the low deterioration in modulus at the high temperature, etc., to show the excellent fatigue resistance and durability while effectively transferring the high oil pressure generated from the brake master cylinder to each wheel and caliper, and as a result may be used for a long time.

[Advantageous Effects]

The present invention uses the brake hose using the PET dip cord having the excellent shape stability at the room temperature and the high temperature, the durability such as stiffness, the high modulus, the low deterioration in modulus at the high temperature, etc., as the new reinforcing member. It was confirmed that the new reinforcing member may solve the problems of the PVA based polymer which has been used as the existing reinforcing member for the brake hose, for example, the large deterioration in modulus at the high temperature and may be preferably used as the reinforcing member for the brake hose.

In addition, the PET dip cord is relatively inexpensive and is made of the PET polymer which is easy in supply and demand, and therefore may be preferably applied as the material of the reinforcing member for the brake hose replacing the existing PVA based polymer.

Therefore, the present invention may provide the brake hose which is inexpensive and has the more excellent physical properties and the new reinforcing member included in the brake hose.

[Description of the Drawings]

FIG. 1 is a diagram schematically illustrating an example in which a brake hose is applied to a general brake apparatus.
FIG. 2 is a diagram schematically illustrating a creep tester used to measure a creep rate.

FIG. 3 is a graph showing a result of deriving a strength-elongation curve after performing heat treatment on a dip cord of Example 1 and Comparative Example 1 at a room temperature and a high temperature of 150 °C.

[Mode for Invention]

Hereinafter, a configuration and action of the present invention will be described in more detail with reference to exemplary embodiments of the present invention. However, the scope of the present invention is not limited to the exemplary embodiments of the present invention and therefore is only present as an example.

## Example 1

A PET polymer having an intrinsic viscosity of 1.05 was used and the PET polymer was melt-spun at a spinning speed of 3800 m / min under a spinning tension of 0.86 g / d according to a general manufacturing method and cooled to manufacture an undrawn yarn. A PET drawn yarn was manufactured by drawing, heat setting, and winding the undrawn yarn at a drawing ratio of 1.53.
A PET dip cord of Example 1 was manufactured by drawing the PET drawn yarn having a total fineness of 1000 deniers manufactured as described above at 60 TPM, dipping it in an RFL adhesive solution, passing it, and drying and heat treating it.
The drying and heat treating condition of the RFL adhesive solution was the same as the processing condition of the general PET tire cord.

## Example 2-7

The PET drawn yarn was each manufactured by the same method as the above Example 1 except that the spinning speed, the spinning tension, the drawing ratio, or the intrinsic viscosity condition is changed as shown in the following Table 1 during the manufacturing of the PET drawn yarn. The PET dip cords was each manufactured by ply-drawing the so manufactured PET drawn yarn by the same method as the above Example 1, dipping it in the adhesive solution, and then drying and heat treating it.

[Table 1]

| Condition | Example 1 | Example 2 | Example 3 | Example 4 | Example 5 | Example 6 |
|---|---|---|---|---|---|---|
| Spining speed (m/min ) | 4000 | 4500 | 4300 | 4800 | 3800 | 3800 |
| Drawing ratio | 1.46 | 1.28 | 1.36 | 1.20 | 1.53 | 1.53 |
| Spinning tension (g/d) | 0.92 | 1.15 | 1.02 | 1.18 | 0.80 | 0.90 |
| Intrinsic Viscosity | 1.05 | 1.05 | 1.05 | 1.05 | 0.9 | 1.3 |

## Comparative Example 1: Manufacturing of PVA based dip cord

The PVA dip cord commercially available from UNI Co. that is one of manufacturers of a dip cord was used as Comparative Example 1.
First, crystallinity and an amorphous orientation factor (AOF) of the PET undrawn yarn obtained according to Examples 1 to 7 were measured by the following method and the measured results were arranged in the following Table 2.

- Crystallinity: It was measured by measuring a density after manufacturing of a density gradient column using $Cl_4$ n-heptane and using the following Calculation Equation.

$$\text{PET Crystallinity (\%) =} \quad Xc\,(\%) = \left( \frac{\rho - \rho_a}{\rho_c - \rho_a} \right) \times 100$$

(In the case of the PET, $\rho_a$ = 1.336 and $\rho_c$ = 1.457).
- AOF: It was calculated based on the following Equation using a birefringence index measured using a polarized light microscopy and a crystalline orientation factor (COF) measured by XRD.

$$AOF = (\text{birefringence index} - \text{crystallinity (\%)} * 0.01 * \text{crystalline}$$

$$\text{orientation factor (COF)} * 0.275)/ ( (1 - \text{crystallinity (\%)} * 0.01) * 0.22)$$

[Table 2]

|  | Example 1 | Example 2 | Example 3 | Example 4 | Example 5 | Example 6 | Example 7 |
|---|---|---|---|---|---|---|---|
| Crystalli nity (%) | 28 | 30 | 36 | 30 | 38 | 26 | 28 |
| AOF | 0.120 | 0.093 | 0.009 | 0.050 | 0.002 | 0.116 | 0.121 |

Next, the creep rates for the dip cords manufactured according to Examples 1 to 7 were measured by the following method.

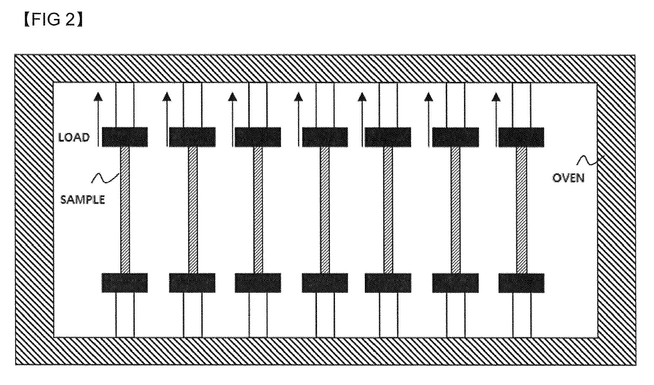

For measuring the above creep rate, a creep tester (manufactured from Toyoseiki Co.) was used as illustrated in FIG. 2. The dip cord (initial sample length $L_0$ = 195mm) according to the above Examples 1 to 7 was heat-treated at 180 °C at a tension of 0.01 g / d for 15 minutes, applied with an initial load of 0.01 g / d using the creep tester to be fixed, and then applied with a load of 0.791 g / d at a temperature of 20 °C and 100 °C and left for 24 hours. After the dip cord is left for 24 hours, the length L of the dip cord according to the above Examples 1 to 7 was measured and the creep rate of each dip cord was measured depending on the above calculation 1 using the lengths L and $L_0$. The measured results of the creep rates were shown in the following Table 3.

[Table 3]

|  | Example 1 | Example 2 | Example 3 | Example 4 | Example 5 | Example 6 | Example 7 |
|---|---|---|---|---|---|---|---|
| Cord creep rate (%) @ 20 °C | 3.7 | 3.7 | 3.5 | 3.6 | 3.3 | 3.8 | 3.7 |
| Cord creep rate (%) @ 100 °C | 6.5 | 6.5 | 5.8 | 6.1 | 5.6 | 6.7 | 6.3 |

Referring to the above Table 3, it was confirmed that the dip cord according to the above Examples 1 to 7 manufactured from the PET undrawn yarn indicating the high crystallinity and the low amorphous orientation factor indicates the low creep rate at the high temperature and the room temperature, and in particular, represents the low creep rate even at the high temperature corresponding to the use condition of the brake hose.

From this, it was confirmed that the dip cord according to the above Examples 1 to 7 has the excellent shape stability.

Test Example:

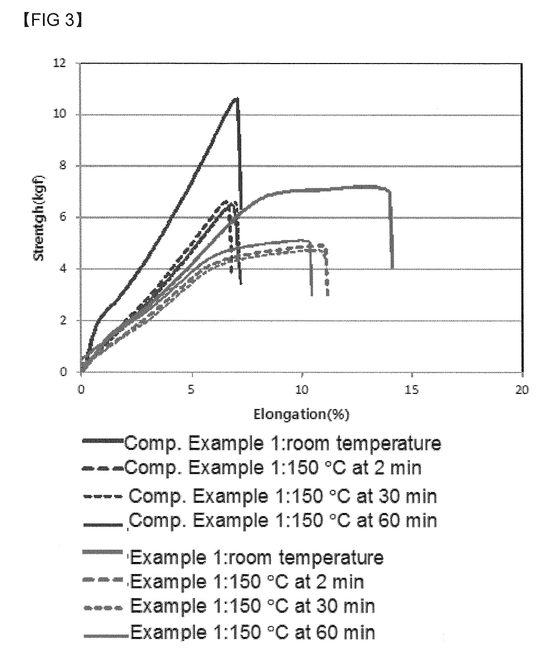

Meanwhile, FIG. 3 is a graph showing a result of deriving a strength-elongation curve after performing heat treatment on a dip cord of Example 1 and Comparative Example 1 at a room temperature and a high temperature of 150 °C by the following method.

By using Instron equipment to which a heating chamber (Oven) is attached, strength and elongation were measured by applying a cross head speed: 25 mm / min, initial load: 50 g (0.05 g / d), Road cell : 5 kN and the strength-elongation curve was derived from the measured strength and elongation. Along with the measurement at the room temperature, the strength-elongation curve was derived by the same method after the dip cords according to the above Example 1 and Comparative Example 1 were left in the oven at 150 °C for 2 minutes, 30 minutes, and 60 minutes.

Referring to FIG. 3, the PET dip cord according to the above Example 1, in particular, shows the high modulus similar to the PVA based dip cord of the above Comparative Example 1 at the high temperature and shows very low deterioration in modulus at the high temperature compared to the above Comparative Example 1. As a result, it was confirmed that the PET dip cord may be very preferably used as the reinforcing member for the brake hose.

As a result, it was confirmed that the PET dip cord cheaper than the PVA based dip cord is applied as the reinforcing member for the brake hose to lower the manufacturing costs of the reinforcing member and the brake hose and provide the brake hose, etc., having the excellent physical properties.

Meanwhile, elongation values (load at specific elongation) when loads of 0.5kgf, 1.0kgf, 2.0kgf, 3.0kgf, 4.5kgf are given were measured in the strength-elongation curve derived by the above method. The elongation change rate (i.e., how the elongation measured after time lapses is larger than the initial elongation) when the initial elongation under the conditions is set to be 100% was calculated based on the elongation measurement result and the calculated elongation change rate was shown in the following Table 4.

[Table 4]

| | Comparative Example 1 | | | | Example 1 | | | |
|---|---|---|---|---|---|---|---|---|
| | Beginning | 2 minutes | 30 minutes | 60 minutes | Beginning | 2 minutes | 30 minutes | 60 minutes |
| 0.5kgf, elongation change rate (%) | 100 | 159 | 159 | No measurement | 100 | 96 | 113 | No measurement |
| 1.0kgf, elongation change rate (%) | 100 | 232 | 234 | 237 | 100 | 147 | 151 | 86 |
| 2.0kgf, elongation change rate (%) | 100 | 253 | 274 | 275 | 100 | 133 | 141 | 111 |
| 3.0kgf, elongation change rate (%) | 100 | 170 | 182 | 181 | 100 | 117 | 123 | 108 |
| 4.5kgf, elongation change rate (%) | 100 | 147 | 155 | 154 | 100 | 140 | 150 | 112 |

Referring to the above Table 4, comparing to the PVA based dip cord according to the above Comparative Example 1, the PET dip cord according to the above Example 1 has the elongation change rate not larger than the initial elongation. Therefore, it was confirmed that the brake hose including the PET dip cord as the reinforcing member has excellent durability and performance when it is used for a long time.

Meanwhile, for the PET dip cord according to the above Example 1 and the PVA based dip cord according to the above Comparative Example 1, the density of the drawn yarn included in each dip cord was measured and the volume ratio and the weight ratio at the same weight and the same volume were calculated based on the measured density and the measured results were shown in the following Table 5.

[Table 5]

|  |  | Comparative Example1 | Example 1 |
|---|---|---|---|
| **Density** | g/cm$^3$ | 1.21 | 1.38 |
| **Volume ratio (same weight)** | % | 100 | 86 (14% ↓) |
| **weight ratio (same volume)** | % | 100 | 114 14% ↑ |

Referring to the above Table 5, the original yarn included in the PET dip cord according to the above Example 1 may show the density larger than the original yarn included in the above Comparative Example 1 and show the volume lower at the same weight. As a result, it was confirmed that the PET dip cord may include the PET original yarn at the higher fineness based on the same volume, and as a result the durability such as the stiffness of the brake hose including the PET dip cord as the reinforcing member may be more improved and the initial expansion rate may be effectively suppressed.

**Claims**

1. A brake hose, comprising:

   rubber layers; and
   a reinforcing member formed between the rubber layers or on the rubber layers,
   wherein the reinforcing member includes a polyethylene terephthalate dip cord that is applied with an initial load of 0.01 g/d to be fixed after being subjected to heat treatment for 15 minutes under a tension of 0.01 g/d at 180 °C and has a creep rate equal to or less than 7.0% when being left for 24 hours while being applied with a load of 0.791 g/d at 100 °C, the creep rate being defined by the following Calculation Equation 1.

   [Calculation Equation 1]

   $$\text{Creep rate} = (L - L_0) / L_0 \times 100$$

   In the above Calculation Equation, L represents a length of the dip cord after the reinforcing member is left for 24 hours and $L_0$ represents a length of the dip cord when the reinforcing member is applied with the initial load to be fixed.

2. The brake hose of claim 1, wherein:

   the polyethylene terephthalate dip cord is applied with the initial load of 0.01 g/d to be fixed after being subjected to the heat treatment for 15 minutes under the tension of 0.01 g/d at 180 °C and has a creep rate equal to or less than 4.0% when being left for 24 hours while being applied with a load of 0.791 g/d at 20 °C, the creep rate being defined by the above Calculation Equation 1.

3. The brake hose of claim 1, wherein:

   when a tensile strength and an elongation of the polyethylene terephthalate dip cord are measured after the polyethylene terephthalate dip cord is subjected to the heat treatment for 2 minutes under the initial load of 0.05 g/d at a temperature of 150 °C, a change rate in the elongation under a specific load of 0.5 to 4.5 kgf based on an initial elongation of 100% measured before the heat treatment is equal to or less than 150 %.

4. The brake hose of claim 1, wherein:

when a tensile strength and an elongation of the polyethylene terephthalate dip cord are measured after the polyethylene terephthalate dip cord is subjected to the heat treatment for 30 minutes under the initial load of 0.05 g/d at a temperature of 150 °C, a change rate in the elongation under a specific load of 0.5 to 4.5 kgf based on an initial elongation of 100% measured before the heat treatment is equal to or less than 160%.

5. The brake hose of claim 1, wherein:

when a tensile strength and an elongation of the polyethylene terephthalate dip cord are measured after the polyethylene terephthalate dip cord is subjected to the heat treatment for 60 minutes under the initial load of 0.05 g/d at a temperature of 150 °C, a change rate in the elongation under a specific load of 0.5 to 4.5 kgf based on an initial elongation of 100% measured before the heat treatment is equal to or less than 120%.

6. The brake hose of claim 1, wherein:

the polyethylene terephthalate dip cord is made of polyethylene terephthalate representing a strength of 5 to 8 g/d, an elongation at (@4.5kg) of 2.0 to 7.0%, and a cut elongation of 10 to 25 %.

7. The brake hose of claim 1, wherein:

the rubber layer includes first and second rubber layers, and
the reinforcing member is formed between the first and second rubber layers.

8. The brake hose of claim 1, wherein:

the polyethylene terephthalate dip cord has a total fineness of 500 to 3000 deniers, ply of 1 to 3, and 0 to 100 TPM.

9. The brake hose of claim 1, wherein:

it is used as a hose that transfers an oil pressure generated from a brake master cylinder of a vehicle to a wheel to brake the wheel.

【FIG 1】

FRONT WHEEL          REAR WHEEL

WHEEL CYLINDER
BRAKE HOSE FRT (RH)
BRAKE VACUUM HOSE
VACUUM BOOSTER
SUCTION
BRAKE HOSE RR (RH)
BRAKE FLUID
MASTER CYLINDER
BRAKE HOSE FRT (LH)
BRAKE HOSE RR (LH)

【FIG 2】

【FIG 3】

Comp. Example 1:room temperature
Comp. Example 1:150 °C at 2 min
Comp. Example 1:150 °C at 30 min
Comp. Example 1:150 °C at 60 min

Example 1:room temperature
Example 1:150 °C at 2 min
Example 1:150 °C at 30 min
Example 1:150 °C at 60 min

## INTERNATIONAL SEARCH REPORT

International application No.

**PCT/KR2014/008906**

| A. CLASSIFICATION OF SUBJECT MATTER |
| --- |
| *F16L 11/04(2006.01)i, F16L 11/08(2006.01)i, F16L 11/10(2006.01)i* |
| According to International Patent Classification (IPC) or to both national classification and IPC |

| B. FIELDS SEARCHED |
| --- |
| Minimum documentation searched (classification system followed by classification symbols) |
| F16L 11/04; B32B 1/08; C08L 33/08; D02G 3/48; B60T 17/04; D02G 3/26; F16L 11/08; B29D 23/00; D01F 6/62; D02G 3/04; F16L 11/10 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: brake, hose, rubber layer, reinforcing material, Polyethylene terephthalate, cord, creep rate, elongation and load |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | KR 10-2010-0100390 A (LS MTRON LTD.) 15 September 2010<br>See abstract, paragraph [0002], claims 1-3, 5 and figure 1. | 1-9 |
| Y | KR 10-2009-0132115 A (KOLON INDUSTRIES, INC.) 30 December 2009<br>See abstract, paragraphs [24], [38], [39], [58] and claims 2, 3, 5. | 1-9 |
| A | JP 2003-211551 A (MEIJI RUBBER & CHEM CO., LTD.) 29 July 2003<br>See abstract, paragraphs [0013], [0014] and figure 1. | 1-9 |
| A | JP 2003-231790 A (TOKAI RUBBER IND. LTD.) 19 August 2003<br>See abstract and paragraphs [0010], [0016]. | 1-9 |
| A | KR 10-2012-0122464 A (UNI., INC) 07 November 2012<br>See abstract, paragraph [0017] and claim 1. | 1-9 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 JANUARY 2015 (14.01.2015) | **14 JANUARY 2015 (14.01.2015)** |
| Name and mailing address of the ISA/**KR**<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.

**PCT/KR2014/008906**

| Patent document cited in search report | Publication date | Patent family member | Publication date |
|---|---|---|---|
| KR 10-2010-0100390 A | 15/09/2010 | KR 10-1102209 B1 | 05/01/2012 |
| KR 10-2009-0132115 A | 30/12/2009 | CN 101680135 A | 24/03/2010 |
| | | CN 101680135 B | 04/05/2011 |
| | | EP 2171140 A1 | 07/04/2010 |
| | | JP 2010-530481 A | 09/09/2010 |
| | | KR 10-1205945 B1 | 28/11/2012 |
| | | US 2010-0154957 A1 | 24/06/2010 |
| | | WO 2008-156334 A1 | 24/12/2008 |
| JP 2003-211551 A | 29/07/2003 | NONE | |
| JP 2003-231790 A | 19/08/2003 | AT 455817 T | 15/02/2010 |
| | | DE 60331014 D1 | 11/03/2010 |
| | | EP 1334995 A1 | 13/08/2003 |
| | | EP 1334995 B1 | 20/01/2010 |
| | | JP 03921682 B2 | 30/05/2007 |
| KR 10-2012-0122464 A | 07/11/2012 | KR 10-1274019 B1 | 12/06/2013 |

Form PCT/ISA/210 (patent family annex) (July 2009)